(19) Europäisches Patentamt
European Patent Office
Office européen des brevets

(11) **EP 2 579 129 A2**

(12) **EUROPEAN PATENT APPLICATION**

(43) Date of publication:
**10.04.2013 Bulletin 2013/15**

(51) Int Cl.:
***G06F 3/03*** $^{(2006.01)}$

(21) Application number: **12187468.9**

(22) Date of filing: **05.10.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **07.10.2011 KR 20110102734**

(71) Applicant: **Samsung Electronics Co., Ltd Gyeonggi-do 443-742 (KR)**

(72) Inventors:
• **Yun, In-Kuk**
**443-742 Gyeonggi-do (KR)**
• **Kim, Chang-Su**
**Seoul (KR)**
• **Lee, Chul-Woo**
**Seoul (KR)**
• **Jang, Won-Dong**
**Seoul (KR)**
• **Kim, Po-Ra**
**443-742 Gyeonggi-do (KR)**
• **Park, Se-Mi**
**443-742 Gyeonggi-do (KR)**
• **Lee, Jeong-Seok**
**443-742 Gyeonggi-do (KR)**
• **Koh, Yeong-Jun**
**Seoul (KR)**

(74) Representative: **Grünecker, Kinkeldey, Stockmair & Schwanhäusser Leopoldstrasse 4 80802 München (DE)**

(54) **Apparatus and method of detecting an input position with display pattern recognition**

(57) An apparatus and method are provided for detecting an input position using display pattern recognition. The apparatus includes an effective pattern area extractor for receiving an image of a display screen captured by a camera and extracting an effective pattern area for pattern recognition from the captured image of the display screen; a pattern recognizer for detecting subpixels included in the effective pattern area and identifying a plurality of holes included in each of the subpixels; and a display coordinate calculator for detecting an input position based on points at which the plurality of holes included in the each of the subpixels are formed.

FIG.1

## Description

## BACKGROUND OF THE INVENTION

1. Field of the Invention

The present invention relates generally to a display device, and more particularly, to an apparatus and method of detecting an input position with display pattern recognition.

2. Description of the Related Art

Recently, a method of entering a position based input by sensing the position on a display screen with pattern recognition has been developed and used as a way of input in a display device. The pattern recognition based method takes a picture of a pattern formed on a display with an input device, such as an electronic pen having a camera, recognizes a pattern in the captured image, detects a position of the electronic pen, and enters an input based on the detected position. Such a method recognizes a command or position pointed to by the electronic pen by photographing a display area pointed to by the electronic pen with the camera that takes a picture in a direction of the tip of the electronic pen and then detecting an arranged pattern from the captured image.

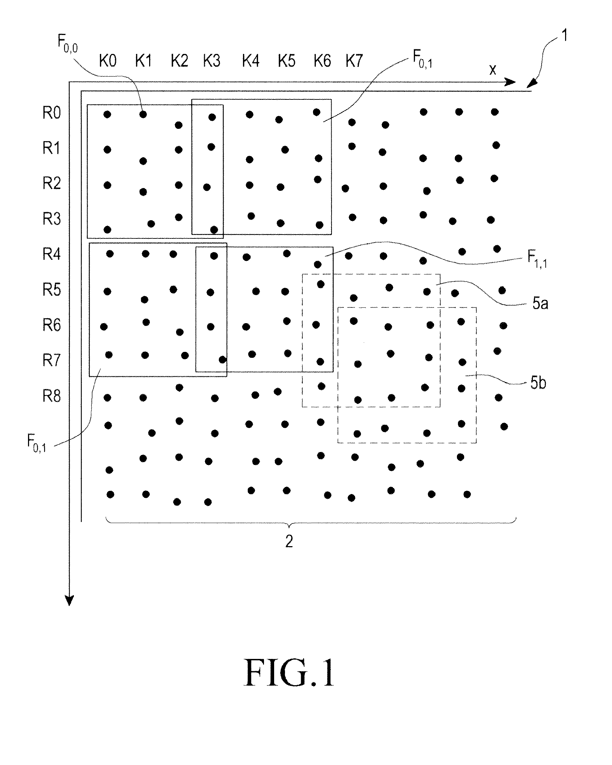

FIG. 1 illustrates a pattern arranged in a display device for a conventional electronic pen input method.

Referring to FIG. 1, on a digital paper 1, a pattern is formed by arranging round dots 2 in a predetermined form by using pigments that absorb Infrared (IR) light. In FIG. 1, the digital paper 1 has a two-dimensional plane of an X-Y axis, having raster lines K0-K7 in the X-axis and R0-R8 in the Y-axis. Rasters are two-dimensional arrays representing an image, where the round dots 2 are positioned based on the raster lines. The round dots 2 each have a value for representing the position of a certain area.

FIG. 1 illustrates an example of recognizing a position by defining coordinates digitized at regular intervals, photographing them in at least a 4 x 4 block, and extracting the coordinate. For example, the position of F0, 0 area can be known by recognizing a pattern of round dots in the 4 x 4 block in the F0, 0 area. Further, even if there are overlapping areas between blocks, e.g., blocks 5a and 5b, recognition may still be possible.

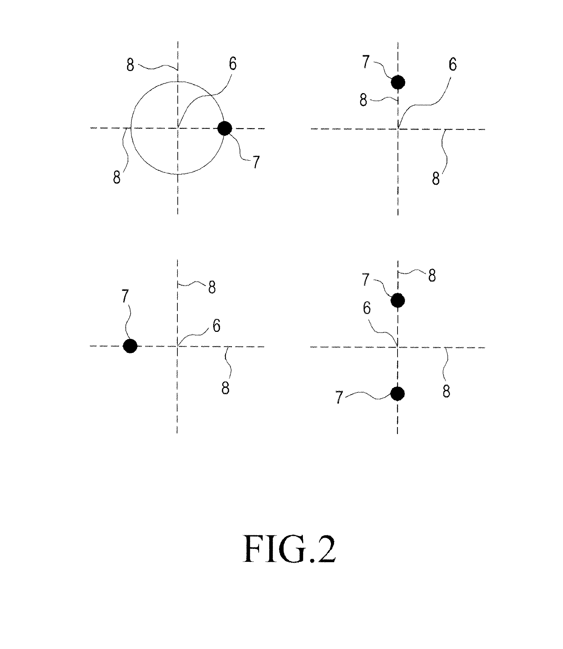

FIG. 2 illustrates a diagram representing examples of round dot positions in a pattern arranged in the display device for a conventional electronic pen input method.

Referring to FIG. 2, in the pattern, a round dot 7 is ensured to be positioned near an intersection 6 of horizontal and vertical raster lines 8 and used to determine an absolute position on the display by determining the value of the round dot 7 based on a distance between the intersection 6 and the round dot 7 and the direction of the position. However, when using the digital paper 1 on a display device, such as a Liquid Crystal Display (LCD) panel, there is a problem in that the digital paper 1 on which a separate pattern is printed has to be attached to the LCD panel while an area onto which no digital paper 1 is attached has to use the electronic pen.

Further, the LCD panel typically includes subpixels corresponding to color filters, each creating one of colors Red (R), Green (G), and Blue B), and a black matrix. Accordingly, if the digital paper 1 is attached onto the surface of the LCD panel, the LCD panel grows thicker, and if the digital paper 1 happens to cover some subpixels, the display brightness deteriorates.

Further, if a material to reflect IR light is used in making the pattern of the digital paper 1, instead of the pigment that absorbs the IR light, the reflective material may affect subpixels of the display panel, thereby undesirably reducing the brightness and the contrast ratio of the display.

Newer LCD-based display devices have bigger screen sizes and higher in resolutions, thus resulting in a greater amount of information for informing the position to which the electronic pen points on the display screen. Therefore, for a display device having a larger screen size and a higher resolution, a pattern should also be information-intensive in order to inform the position of the electronic pen.

For example, although the recent market is still dominated by Full High Definition (FHD) class display devices, Ultra High Definition (UHD) class display devices are expected to become mainstream in the future market. Accordingly, patterns should become more information-intensive for position information for about 10 million pixels of the UHD class display devices.

However, the conventional method of using the digital paper 1 is inefficient in forming the information-intensive pattern because the pattern is physically manufactured. Also, when a part of the pattern of the digital paper 1 is lost or erroneous, another problem arises that the error cannot be checked.

In addition, the conventional method of using the digital paper 1 is susceptible to leaking the pattern technology, because the pattern is fixed.

Therefore, pattern recognition methods other than the digital paper based pattern recognition method, which fit properties of the display device, are required.

## SUMMARY OF THE INVENTION

Accordingly, the present invention is designed to address at least the problems and/or disadvantages described above and to provide at least the advantages described below.

Accordingly, an aspect of the present invention is to provide an apparatus and method of detecting a position using display pattern recognition.

Another aspect of the present invention is to provide an apparatus and method of detecting an input position by recognizing a pattern formed in a display panel, based on properties of the display panel instead of digital paper.

Another aspect of the present invention is to provide an apparatus and method of detecting a position using display pattern recognition, which reduce required calculations and thus memory consumption, by applying a low complex algorithm in recognition of a pattern formed in the display panel to detect an input position.

Another aspect of the present invention is to provide an apparatus and method of detecting a position using display pattern recognition, which enable better detection of an input position by minimizing errors and noise in recognition of a pattern formed in the display panel to detect the input position.

In accordance with an aspect of the present invention, an apparatus is provided for detecting an input position using display pattern recognition. The apparatus includes an effective pattern area extractor for receiving an image of a display screen captured by a camera and extracting an effective pattern area for pattern recognition from the captured image of the display screen; a pattern recognizer for detecting subpixels included in the effective pattern area and identifying a plurality of holes included in each of the subpixels; and a display coordinate calculator for detecting an input position based on points at which the plurality of holes included in the each of the subpixels are formed.

In accordance with another aspect of the present invention, a method of detecting an input position using display pattern recognition is provided, The method includes receiving an image of a display screen captured by a camera; extracting an effective pattern area for pattern recognition from the captured image of the display screen; detecting subpixels included in the effective pattern area; identifying a plurality of holes included in each of the subpixels; and detecting an input position based on points at which the plurality of holes included in each of the subpixels are formed.

## BRIEF DESCRIPTION OF THE DRAWINGS

The above and other aspects, features, and advantages of certain embodiments of the present invention will become more apparent from the following detailed description taken in conjunction with the accompanying drawings, in which:

FIG. 1 illustrates a pattern arranged in a display device for a conventional electronic pen input method;

FIG. 2 illustrates positioning of round dots in a pattern arranged in a display device for a conventional electronic pen input method;

FIG. 3 illustrates a pattern formed in a display panel, according to an embodiment of the present invention;

FIG. 4 is a block diagram illustrating an apparatus for detecting a position using display pattern recognition, according to an embodiment of the present invention;

FIG. 5 illustrates a captured image of a display screen, according to an embodiment of the present invention;

FIG. 6 illustrates a captured image of a display screen, according to an embodiment of the present invention.;

FIG. 7 illustrates a graph of projection values belonging to a minor set, according to an embodiment of the present invention;

FIG. 8 illustrates a graph of projection values belonging to a major set, according to an embodiment of the present invention;

FIGs. 9A and 9B illustrate vertex positions of a square formed by a black matrix selected according to an embodiment of the present invention;

FIGs. 10A and 10B illustrate graphs representing changes in pixel values resulting from projection in an effective pattern area in a direction of an X-axis, according to an embodiment of the present invention;

FIG. 11 illustrates a method of exploring a dent hole, according to an embodiment of the present invention;

FIGs. 12A and 12B illustrate a method of exploring a position hole or a parity hole, according to an embodiment of the present invention;

FIG. 13 illustrates a pattern recognition result based on holes determined according to an embodiment of the present invention, and

FIG. 14 is a flowchart illustrating a method of detecting a position by recognizing a pattern formed on the display panel, according to an embodiment of the present invention.

**DETAILED DESCRIPTION OF EMBODIMENTS OF THE INVENTION**

Various embodiments of the present invention will now be described in detail with reference to the accompanying drawings. In the following description, specific details such as detailed configuration and components are merely provided to assist the overall understanding of these embodiments of the present invention. Therefore, it should be apparent to those skilled in the art that various changes and modifications of the embodiments described herein can be made without departing from the scope and spirit of the present invention. In addition, descriptions of well-known functions and constructions are omitted for clarity and conciseness.

In accordance with an embodiment of the present invention, an apparatus and method are disclosed for detecting a pixel position by recognizing a pattern formed on a display panel. Specifically, a pixel position is detected by recognizing a pattern, where the pattern represents the pixel position with subpixels (R, G, B) in a display device for displaying an image with the pixels that consist of the subpixels. The apparatus receives a pattern image on a display screen captured by a camera, extracts an effective pattern area from the received pattern image, recognizes a pattern of the effective pattern area, and detects a position that corresponds to the recognized pattern. The detected position may be a position to which an input device is pointing or a position to which the input device attempts to enter an input, and the position may be used to enter or recognize a certain input or command that corresponds to the position.

Although embodiments of the present invention will be described below using an LCD panel in which a pattern is formed, the following embodiments of the present invention may be applied to any display device in which a pattern using the subpixels may be formed, where the display device includes pixels having subpixels, e.g., an LCD panel, a Plasma Display Panel (PDP), an Organic Light-Emitting Display (OLED), and an Electronic Paper.

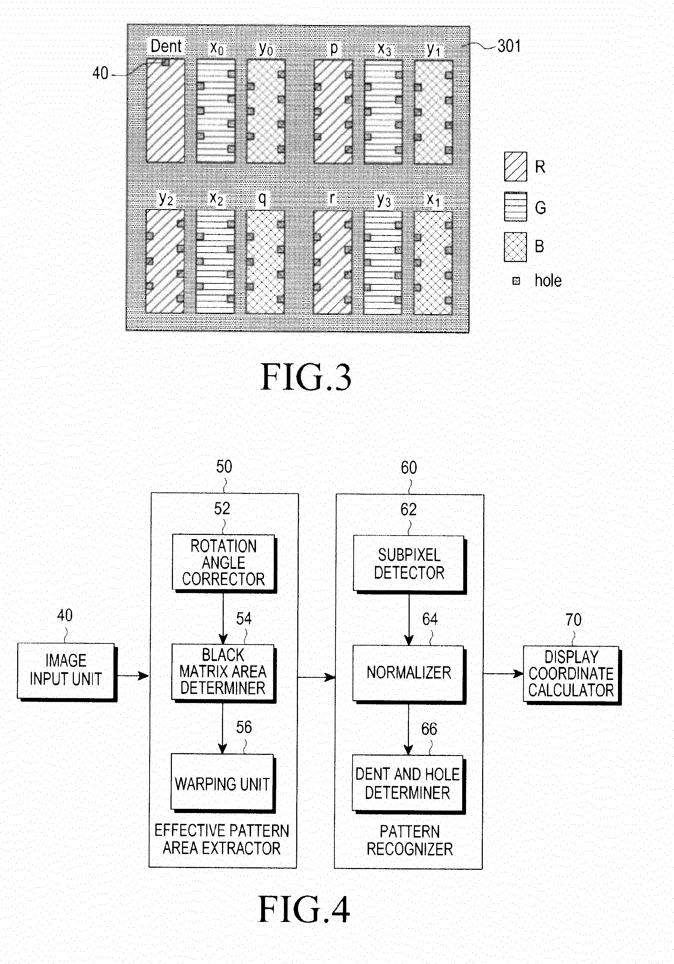

FIG. 3 illustrates a pattern formed in a display panel, according to an embodiment of the present invention.

Referring to FIG. 3, the pattern which facilitates the determination of a pixel position using subpixels (R, G, B) and a black matrix 301 is formed in the display panel. Each of R, G, B subpixels includes at least one hole at a certain position therein, according to a predetermined pattern scheme to determine the pixel position. The holes are formed when a part of the black matrix area is drawn into and included in each R, G, B subpixel area, and may be formed of the same material as that of the black matrix area. The holes may also be formed of any other material that is recognizable as a pattern in the R, G, B subpixels, and may also be arranged in other locations.

Specifically, FIG. 3 illustrates a 2 x 2 pixel based pattern including a subpixel referred to as "Dent" having a dent hole 40, subpixels X0, X1, X2, and X3 having X coordinate holes, and subpixels Y0, Y1, Y2, and Y3 having Y coordinate holes, and subpixels p, q, and r having error detection holes.

The dent hole 40 represents a basis for calculating an absolute position value of a pixel, and is formed at a point at which it is clearly distinguishable from other holes. The X coordinate holes are formed at points that represent values for calculating an X coordinate value of the pixel. The Y coordinate holes are formed at points that represent values for calculating a Y-coordinate value of the pixel. The error detection holes are formed at points that represent values for determining whether the points at which the X-and Y coordinate holes are formed is correct.

When supporting up to 4802 X 2744 resolution, the dent hole 40 may be formed first in a single subpixel Dent to set a basis for calculating the absolute position value of the pixel. For the XY coordinate values, seven septernary numbers for X0 X1, X2, X3, Y1, Y2, and Y3 and one quaternary number for Y0 may be used, in which case position holes that correspond to X coordinate holes may be formed at seven points within four subpixels X0, X1, X2, and X3 because the maximum X coordinate value is 4802. The seven points each represent a value of 0~6, and the X coordinate value may be calculated by Equation (1).

$$\text{X coordinate value} = 7^3 \times X3 \ + 7^2 \times X2 + 7 \times X1 + X0 \ \dots (1)$$

Because the maximum Y coordinate value is 2744, position holes corresponding to Y coordinate holes may be formed at seven points within four subpixels Y0, Y1, Y2, and Y3. The seven points within each of subpix els Y1, Y2, and Y3 each represent a value of 0~6, while seven points within the subpixel Y0 each have a value of 0 to 3 because the subpixel Y0 uses the quaternary number. Thus, the Y coordinate value may be calculated using Equation (2).

$$\text{Y coordinate value} = 7^2 \times 4 \times Y3 \ + 7 \times 4 \times Y2 + 4 \times Y1 + Y0 \qquad \dots (2)$$

In order to determine whether the points at which the X and Y coordinate holes are formed are correct, i.e., whether there is an error at the points, a parity check technique is applied to form parity holes at seven points within each of three subpixels p, q, and r. The parity check technique, in principle, discovers an error by adding an extra parity checker bit to ensure the number of bits that represent "l" in binary form to be even or odd. Because a septernary number is used, the parity checker may have a value from 0 to 6.

The seven hole points within each of the p, q, and r subpixels represent a value obtained by summing up values of certain position holes, i.e., represent a parity bit. Thus, the value (parity bit) of each of the p, q, r subpixels may be calculated using Equation (3).

$$p = modulo7(X3 + Y1 + X0)$$

$$q = modulo7(X2 + Y2)$$

$$r = modulo7(X1 + Y3 + Y0) \qquad \dots (3)$$

In Equation (3), p is a basis for determining an error for X3, Y1, and X0, and q is a basis for X2 and Y2. Also, r is a basis for determining an error for the values of X1, Y3, and Y0.

An error is determined to occur when a result of the modulo operation of each of p, q, r and the parity hole value are different in the decoding process. Accordingly, a single error occurrence guarantees the error detection.

Such an error detection technique should also be applied in determining positions for a partial combination of two basic patterns (floating property). To enable the parity check according to the floating property, position hole information is transformed based on the position of the parity hole. If an error occurs in a hole that corresponds to a lower significant digit, then an error also occurs in a hole that corresponds to a higher significant digit. If only one parity check equation is used, an error occurring in a hole brings the same result of occurring errors in two or more holes because the holes in which errors occur are subject to the same parity check equation.

This problem may be solved by involving position holes of the same coordinate axis in different parity check equations. The X-axis and Y-axis each have 4 position holes, and a total of 4 parity check equations are used. However, available holes, except for the dent and position holes, should be included in 3 subpixels. Therefore, up to 3 parity check equations may be used.

However, a problem inevitably arises in that position holes for the same coordinate axis are subject to one parity check equation. Accordingly, it is desirable to use a method involving position holes that correspond to a least significant digit and a most significant digit in a same parity check equation, as in Equation (3) for p, q, and r, because it is less likely for an error occurring at a position hole that corresponds to the lowest significant digit to affect a position hole to the highest significant digit.

In FIG. 3, the structure of the 2 x 2 pixel base pattern is illustrated as an example to explain hole points and values. However, one of ordinary skill in the art will realize that a pattern formed on a single pixel basis, or patterns formed on various pixel basis, such as 2 x 3 basis, 3 x 3 pixel basis, etc., may be used. Alternatively, a pattern formed in the display device may be ciphered using a predetermined shuffle table.

Once the display panel has a pattern formed, an input device (e.g., an electronic pen, etc.) generates light in a direction of the display panel, captures a display screen illuminated by the light with a camera, and detects the input position of the input device from the captured image of the display screen.

This is achieved because the black matrix 301 in the display screen is formed to have a material or structure that absorbs light generated by a light source of the input device, and when the input device illuminates the display screen and takes a picture of it with the camera, light absorption occurs in the black matrix 301 area so the image is black for the black matrix 301 area.

According to an embodiment of the present invention, because the plurality of holes included in the subpixel are also formed of the same material as that of the black matrix 301 area or of a material that absorbs light, they also appear black. Thus, because the captured image appears as a pattern formed by the black matrix and the plurality of holes and the pattern is predetermined or stored to correspond to a position, detection of the position of the captured image becomes possible using the recognized pattern.

FIG. 4 is a block diagram illustrating an apparatus for detecting a position using display pattern recognition, according to an embodiment of the present invention.

Referring to FIG. 4, the apparatus includes an image input unit 40, which enters an image of a display screen captured by a camera of an input device, an effective pattern area extractor 50, a pattern recognizer 60, a display coordinate calculator 70.

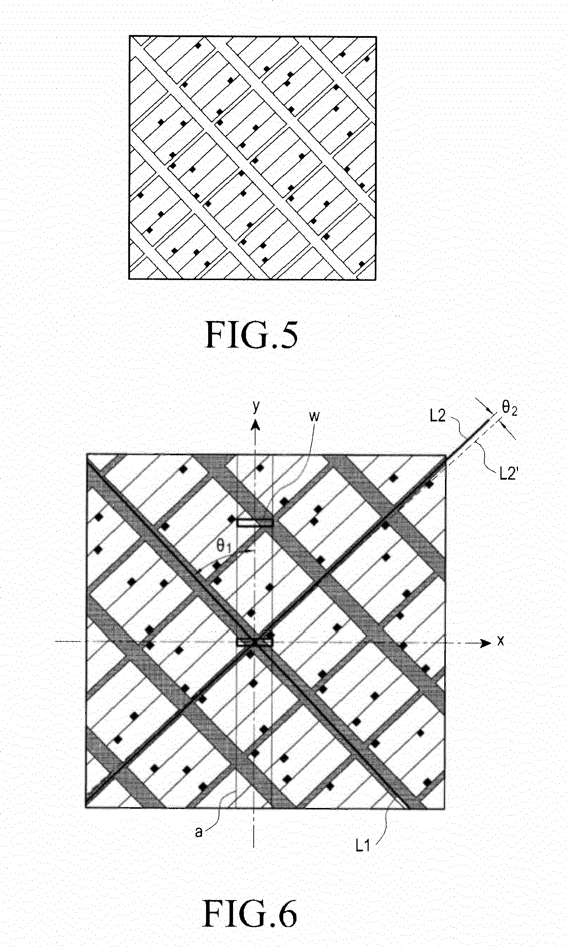

FIG. 5 illustrates a captured image of the display screen, according to an embodiment of the present invention.

Referring to FIG. 5, in the captured image of the display screen includes a pattern predetermined with a plurality of holes. Specifically, dark lines represent the black matrix area, bright rectangular areas edged by the dark lines represent subpixel areas, and dark rectangular dots within each subpixel area represent holes. The holes may include a dent hole for calculating an absolute position value of a pixel, position holes for calculating horizontal and vertical coordinate values of the pixel, and parity holes for error detection.

The captured image of the display screen is entered in the effective pattern area extractor 50, and the effective pattern area extractor 50 extracts an effective pattern area from the captured image as illustrated in FIG. 5. The effective pattern area refers to an area to be used for pattern recognition from the captured image. Specifically, the effective pattern area extractor 50 corrects some distortion due to the difference between the captured image of the display screen and an actual image of the display screen, detects a black matrix area from the corrected image, and extracts the effective pattern area in a predetermined basic pattern block size to detect an arbitrary position using the black matrix area.

Referring again to FIG. 4, to extract the effective pattern image, the effective pattern area extractor 50 includes a rotation angle corrector 52, a black matrix area detector 54, and a warping unit 56. The rotation angle corrector 52 corrects the difference (distortion) between the actual image of the display screen and the captured image of the display screen that occurs because the angle between the camera photographing the image of the display screen and the display screen to be captured is not exactly perpendicular.

FIG. 6 illustrates a captured image of a display screen, according to an embodiment of the present invention.

Referring to FIG. 6, the rotation angle corrector 52 calculates and corrects a rotated angle when dark lines corresponding to the black matrix in the captured image of the display screen are not exactly straight lines or two intersecting dark lines are not exactly intersecting at +90°. Specifically, the rotation angle corrector 52 firstly recognizes a first dark line (a first black matrix area)(L1) to be used as a basis, and obtains a first rotation angle($\Theta_1$) when the first black matrix area(L1) is rotated with respect to a vertical axis(y) of the captured image of the display screen. The rotation angle corrector 52 also recognizes a second dark line (a second black matrix area) (L2) intersecting with the first dark line(L1), and obtains a second rotation angle($\Theta_2$) when the second black matrix area(L2) is rotated with respect to an angle(L2') perpendicular to the first black matrix area(L1). The rotation angle corrector 52 also corrects the captured image of the display screen based on the first and second rotation angles($\Theta_1$, $\Theta_2$).

More specifically, in order to calculate the first rotation angle($\Theta_1$), the rotation angle corrector 52 establishes an exploring area(a) for a base point by fixing a center of the captured image of the display screen as a basis for the X-axis (horizontal axis) direction and setting up the entire height of the captured image of the display screen for the y-axis (vertical axis) direction. The rotation angle corrector 52 explores a predetermined exploring area(a) for the base point with a window in a predetermined dimension (illustrated as a 3 x 5 window in a blue rectangle in FIG. 5), and sets up a base point to be a point where the sum of values of pixels within the window area(w) becomes the minimum. Then, the rotation angle corrector 52 generates straight lines passing through the base point from 0°to 356°at 2°intervals on the image of the display screen, obtains variance of pixels through which each straight line passes, and recognizes a straight line having minimum variance to be the first black matrix area(L1). The rotation angle corrector 52 calculates a slope of the straight line corresponding to the first black matrix area(L1) with respect to the vertical axis(y) of the captured image of the display screen to be the first rotation angle($\Theta_1$).

In order to obtain the second rotation angle($\Theta_2$), the rotation angle corrector 52 sets up a second base point for obtaining a straight line that corresponds to the second black matrix area(L2) to be a point which is perpendicular to the straight line corresponding to the first black matrix(L1) and at which the sum of values of pixels within the 3 x 5 pixel area becomes the minimum. Then, the rotation angle corrector 52 generates straight lines passing through the second base point from +75°to +105°with respect to the straight line corresponding to the first black matrix(L1) at 2°intervals, obtains variance of pixels through which each straight line passes, and recognizes a straight line having minimum variance as the second black matrix area(L2). The rotation angle corrector 52 calculates a slope of the straight line corresponding to the second black matrix area(L2) with respect to a slope(L2') perpendicular to the slope of the straight line corresponding to the first black matrix area(L1) of the captured image of the display screen to be the second rotation angle($\Theta_2$). The rotation angle corrector 52 also corrects the captured image of the display screen based on the first and second rotation angles($\Theta_1$, $\Theta_2$).

As described above, upon completion of correcting the captured image of the display screen, the effective pattern area extractor 50 determines the black matrix area with the black matrix area determiner 54. The black matrix area determiner 54 explores each of the intersecting first and second black matrix areas and determines whether each of the first and second black matrix areas corresponds to a wide black matrix area formed between pixels or a narrow black matrix area formed between subpixels.

Typically, in the display panel, a set of R, G, and B subpixels constitutes a pixel, and thus the distance between pixels and the distance between the subpixels are different. Widths of black matrix areas between pixels and between subpixels are different as well. Because the distance between pixels is longer than that between subpixels, the width of the black matrix area formed between pixels is wider than that formed between subpixels. Accordingly, if the black matrix area is wide, the black matrix is recognized as the wide black matrix area formed between pixels, and if narrow, it is recognized as the narrow black matrix area formed between subpixels.

The black matrix area determiner 54 calculates a projection value for each point, which is the sum of all pixel values of a straight line intersecting with the point, while moving along each of the first and second black matrix areas. Then, the black matrix area determiner 54 determines whether each of the intersecting first and second black matrix areas belongs to a minor set in which both the wide and narrow black matrix areas exist, or a major set consisting only of the wide black matrix areas, based on the distribution of projection values.

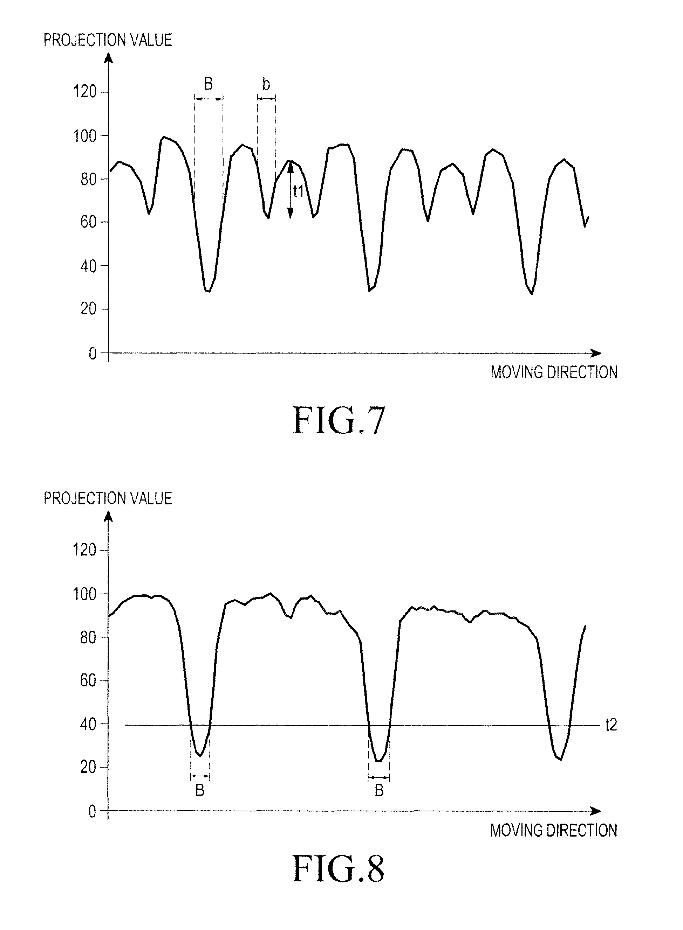

FIG. 7 illustrates a graph of projection values belonging to a minor set, according to an embodiment of the present invention.

FIG. 8 illustrates a graph of projection values belonging to a major set, according to an embodiment of the present invention.

Referring to FIGs. 7 and 8, the X-axis represents moving direction, and the Y-axis represents projection values. A point having a maximum projection value is a point having the maximum distribution of pixels, and a point having a minimum projection value is a point having a minimum distribution of pixels, i.e., a point having the maximum black matrix area.

Referring first to FIG. 7, a point having a low projection value between points having high projection values belong to the black matrix area. Specifically, a narrow black matrix area (b) corresponds to a point having a little lower projection value and a wide black matrix area (B) corresponds to a point having a significantly lower projection value. A predetermined threshold t1 may be applied to distinguish the narrow black matrix area (b) and the wide black matrix area (B) from each other.

Referring to FIG. 8, only wide black matrix areas (B) exist that correspond to points having minimum projection values. Each wide black matrix area (B) corresponds to a section of points including a point having the minimum projection value, between points having threshold projection values t2.

The black matrix area determiner 54 detects all the black matrix areas in the image of the display screen corrected in the way described above, selects a black matrix area nearest to the center of the image of the display screen from among the detected black matrix areas, and provides the selected black matrix area to the warping unit 56.

The warping unit 56 performs sophisticated exploration at 0.5° intervals on four wide black matrix areas located outside of the black matrix area selected by the black matrix area determiner 54. The warping unit 56 calculates a rotated angle more sophisticatedly compared with the black matrix area determiner 54 that does the same at 0.5° intervals. The warping unit 56 detects the black matrix area more sophisticatedly within the range of -2.5°-+2.5° with respect to the current angle. The warping unit 56 then determines vertex positions of a square formed by 4 selected wide black matrix areas.

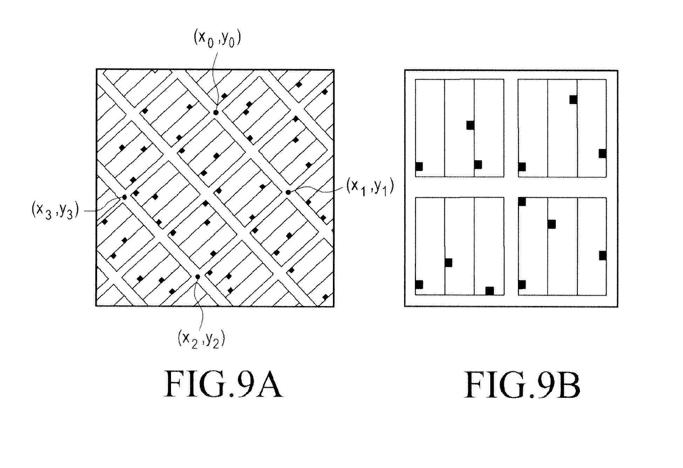

FIGs. 9A and 9B illustrate vertex positions of a square formed by black matrix areas selected according to an embodiment of the present invention.

Referring to FIG. 9A, the warping unit 56 determines four vertices, (x0, y0), (x1, y1), (x2, y2), and (x3, y3), and performs warping with respect to each of the vertices. Warping reconstructs a non-rotated image, as illustrated in FIG. 9B from the rotated image illustrated in FIG. 9A.

After reconstructing the image as illustrated in FIG. 9B, the warping unit 56 extracts the square block with four vertices as an effective pattern area. In this regard, the warping unit 56 extracts the effective pattern area by determining a longest side (1_new) among four sides of the square with the four vertices to be the height of the effective pattern area, generating a new coordinate system on the height basis, and replacing pixel values in the new coordinate system by pixel values that correspond to corresponding coordinate values of an original image. Specifically, an Affine matrix of Equation (4) may be used as follows:

$$A = \begin{bmatrix} \sum_{i=0}^{3} (x_i - ctr\_x) * (f\_l_i / 2) / l_{new}^2 & \sum_{i=0}^{3} (x_i - ctr\_x) * (s\_l_i / 2) / l_{new}^2 \\ \sum_{i=0}^{3} (y_i - ctr\_y) * (f\_l_i / 2) / l_{new}^2 & \sum_{i=0}^{3} (y_i - ctr\_y) * (s\_l_i / 2) / l_{new}^2 \end{bmatrix}$$

$$Y_{warping}(x, y) = Y_{input}(A[0][0] \cdot x + A[0][1] \cdot y, A[1][0] \cdot x + A[1][1] \cdot y) \qquad \dots (4)$$

In Equation (4), ctr_x and ctr_y each represent the four points' center of gravity in the original image. f_l$_i$ represents $\{-I_{new}/2, I_{new}/2, I_{new}/2, -I_{new}/2\}$. S_l$_i$ represents $\{-I_{new}/2, -I_{new}/2, I_{new}/2, I_{new}/2\}$.

Once the effective pattern area, as illustrated in FIG. 9B, is extracted, the apparatus for detecting the position using the display pattern recognition detects subpixels within the effective pattern area with the pattern recognizer 60, normalizes the quality of the subpixels, and then determines the dent and position holes to recognize a pattern.

More specifically, the pattern recognizer 60 includes a subpixel detector 62, a normalizer 64, and a dent and position hole determiner 66.

The subpixel detector 62 explores a boundary between each of subpixels and the black matrix area, and uses the explored boundary to detect each subpixel area. Specifically, because the subpixel may contact the wide or narrow matrix area, the subpixel detector 62 distinguishes a boundary with the wide black matrix area (Thick Boundary, TCB) from a boundary with the narrow black matrix area (Thin Boundary, TNB), explores the TCB, and then explores the TNB based on the TCB. The subpixel detector 62 explores the TCB using a difference in pixel values between the black matrix area and the subpixel, because the pixel value for the black matrix area has a dark value and the pixel value for the subpixel has a bright value. The subpixel detector 62 sets a location where there is a big change in pixel values to be the TCB by using the difference in pixel value between the black matrix area and the subpixel.

The subpixel detector 62 performs a projection on the entire image corresponding to the extracted effective pattern area in horizontal (X-axis) and vertical (Y-axis) directions and observes the change in pixel values.

The change in pixel values is calculated using Equation (5).

$$diff_x = p_x(x) - p_x(x-1)$$

$$diff_y = p_y(y) - p_y(y-1) \qquad \dots (5)$$

In Equation (5), $diff_x$ is an amount of change of a value resulting from the projection in the X-axis direction, and $diff_y$ is an amount of change of a value resulting from the projection in the Y-axis direction. A point having the maximum $diff_x$ is a turning point from which a dark area turns to a bright area, and corresponds to the left TCB of the subpixel, and a point having the minimum $diff_x$ is a turning point from which a bright area turns to a dark area, and corresponds to the right TCB of the subpixel.

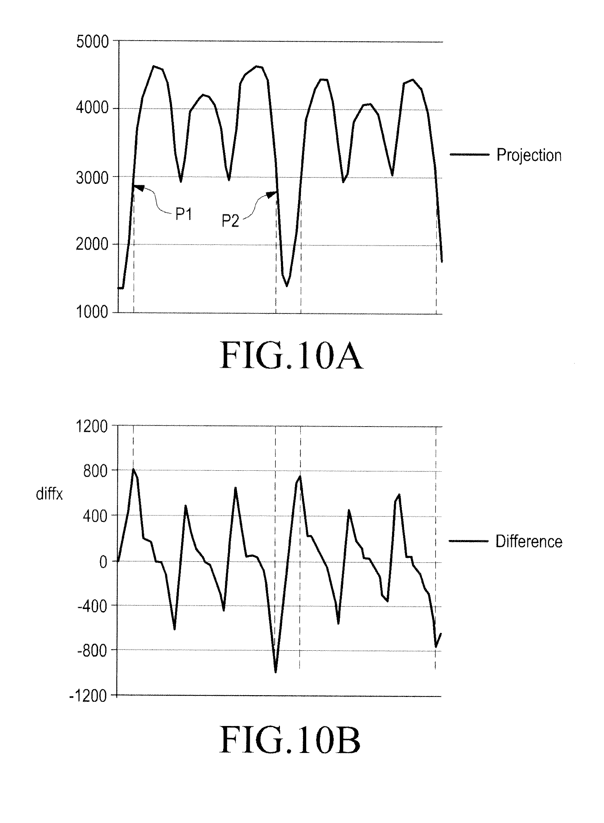

FIGs. 10A and 10B illustrate graphs representing changes in pixel values resulting from the projection in the X-axis direction in the effective pattern area, in an accordance with an embodiment of the present invention. Specifically, FIG. 10A illustrates a graph of projection results, and FIG. 10B illustrates a graph of changes in pixel values of the projection results.

Referring to FIG. 10A, a point P1 having the maximum $diff_x$ is a turning point from which a dark area turns to a bright area, and corresponds to the left TCB of the subpixel, and a point P2 having the minimum $diff_x$ is a turning point from which a bright area turns to a dark area, and corresponds to the right TCB of the subpixel. The subpixel detector 62 obtains upper and lower TCBs by performing the projection in the upward and downward directions of the subpixel, respectively.

After obtaining the TCB of the subpixel, the subpixel detector 62 explores the TNB based on the position of the TCB. Because the TNB is likely to be at points that are 1/3 and 2/3 of the distance between the left TCB and the right TCB, the subpixel detector 62 determines the 1/3 and 2/3 points of the distance between the TCBs to be expected TNB points. The subpixel detector 62 sets an exploration range for the TNB to be the range from -2 to +2 with respect to the expected TNB points, sums pixel values on the Y-axis, and sets a position having the minimum sum of the pixel values on the Y-axis to be the TNB. The range of the Y-axis having the pixels thereon to be summed is from the upper TCB to the lower TCB.

According to the foregoing method, the subpixel detector 62 explores a boundary between each subpixel and the black matrix, and uses the explored boundary to detect each subpixel area.

After detecting the subpixel area, the normalizer 64 of the pattern recognizer 60 performs normalization on the area. The normalization performs adjustment of the brightness in the subpixel area to be flattened out. This facilitates detection of holes within the subpixel area. The dent and hole determiner 66 in the pattern recognizer 60 determines the dent hole, position holes, or parity holes in the subpixel area having the brightness adjusted by the normalizer 64.

First, to determine the dent hole, the normalizer 64 limits the normalization only to an expected dent hole area in order to minimize the processing amount of the normalization.

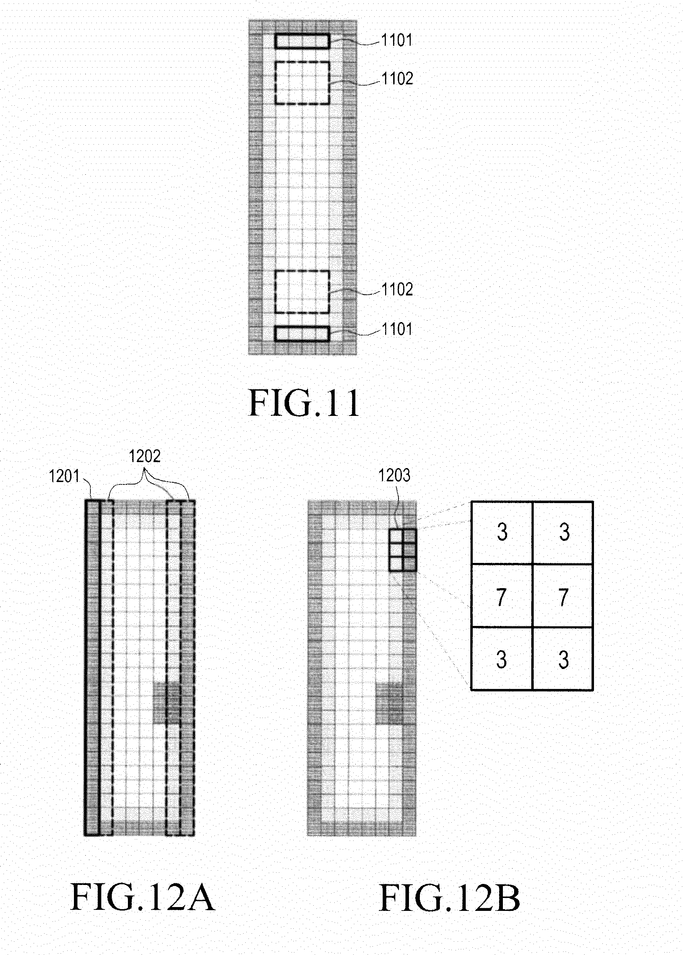

FIG. 11 illustrates a subpixel for explaining a method of exploring a dent hole, according to an embodiment of the present invention.

Referring to FIG. 11, the dent hole may be positioned on top of the subpixel, or may be positioned in the expected dent hole area, i.e., area 1101 on top or at bottom of the subpixel, as illustrated in FIG. 11 because the image is rotated 180 °from an original image. The normalizer 64 sets areas 1102, as illustrated in FIG. 11, at the center of the subpixel as a base area for normalization, and performs normalization on the expected dent hole area by using the base area for normalization. That is, the normalizer 64 performs normalization to correct the flattened pixel value in the expected dent hole area (dent_block) by using a ratio of an average pixel value in the base area for normalization (comparison_block) of the subpixel and an average value of pixel values in base areas for normalization of all subpixels in the effective pattern area(comparison$_{avg}$).

Such normalization may be performed using Equation (6).

$$dent\_block[d] = dent\_block[d] * comparison_{avg} / comparison\_block[d] \qquad \dots (6)$$

After the normalization, the dent and hole determiner 66 determines the dent hole by selecting a subpixel having a largest difference between the dent_block value and the comparison$_{avg}$ value.

To determine position holes and parity holes, the normalizer 64 performs normalization on each subpixel in the effective pattern area, independently.

FIGs. 12A and 12B illustrate subpixels for explaining a method of exploring position holes and parity holes, according to an embodiment of the present invention. Specifically, FIG. 12A illustrates an area subject to normalization in exploring position holes and parity holes and FIG. 12B illustrates a subpixel for determining the position holes and parity holes.

Referring to FIG. 12A, the position holes and parity holes may be positioned on left and right edges, according to an embodiment of the present invention. Thus, the position holes and the parity holes are explored by setting the left and right edges of the subpixel to expected areas of the position holes and the parity holes.

The normalizer 64 then sets the left edge area 1201, as illustrated in FIG. 12A, to be the base area for normalization, and performs normalization on the expected area 1202 of the position holes and parity holes. That is, the normalizer 64 corrects a pixel value in the expected area 1202 of the position holes and parity holes based on the average pixel value of the base area for normalization. The normalizer 64 calculates the average pixel value of the expected area 1202 of the position holes and parity holes, except for the base area for normalization, and corrects the pixel value so that each average value is equal to the pixel value of the base area for normalization. The normalization may be performed using Equation (7).

$$Y = Y + left\_line_{avg} - other\_line_{avg} \qquad \dots (7)$$

In Equation (7), other_line represents an expected area 1202 of the position holes and parity holes, except for the base area for normalization, and Y is a pixel belonging to other_line.

After performing normalization on all the subpixels one by one, the dent and hole determiner 66 explores the expected area 1202 of the position holes and parity holes of each subpixel and determines the position holes and the parity holes.

Referring to FIG. 12B, the dent and hole determiner 66 applies a 3 x 2 size window 1203 for applying weights to the expected area 1202 of the position holes and parity holes of the subpixel, finds a point where the sum of weighted pixel values has the minimum, and determines the point to be where the position hole or parity hole is formed. The 3 x 2 size window 1203 facilitates determination of the point where there is the minimum pixel value by applying a weight to each pixel value to reveal the difference of pixel values more clearly. Although the 3 x 2 size window 1203 is illustrated in FIG. 12B, other size windows may also be applied to facilitate the determination with any other weights.

Upon completion of pattern recognition with the dent, position, and parity holes determined in the effective pattern area by the pattern recognizer 60, the display coordinate calculator 70 detects the pixel position based on the pattern recognition result.

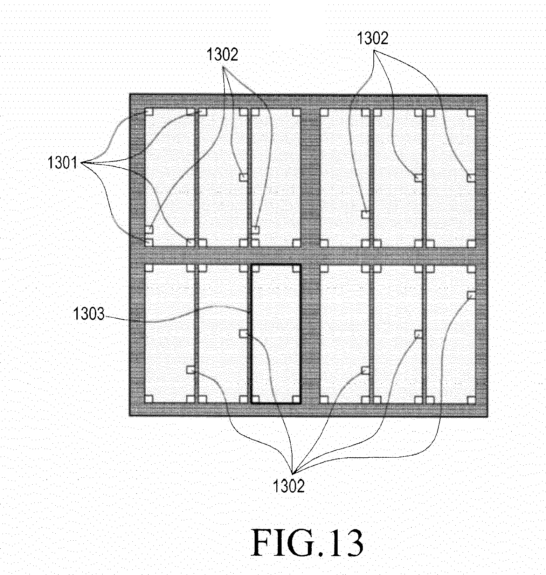

FIG. 13 illustrates a pattern recognition result based on determined holes, according to an embodiment of the present invention.

Referring to FIG. 13, four dots 1301 on the corners of the subpixel are dots for distinguishing the subpixel area, and dots 1302 inside of the subpixel are position and parity holes. A subpixel 1303 having no holes inside is a subpixel having the dent hole. The display coordinate calculator 70 detects the pixel position by analyzing points where the dent hole, the position holes, and the parity holes are formed, as illustrated in FIG. 13, and by calculating a display coordinate of the pixel.

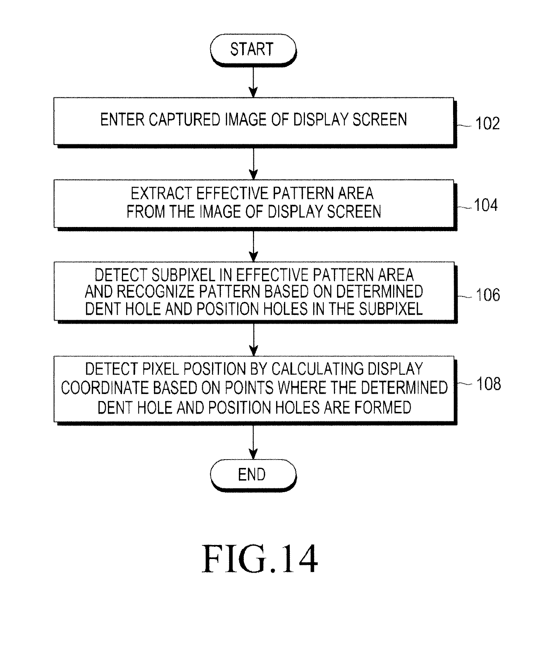

FIG. 14 is a flowchart illustrating a method of detecting a position by recognizing a pattern formed on a display panel, according to an embodiment of the present invention.

Referring to FIG. 14, the apparatus for detecting a position using display pattern recognition receives an image of a display screen captured by a camera of an input device, such as an electronic pen, in step 102. A pattern that represents the position appears in the image of the display screen.

The apparatus extracts an effective pattern area from the captured image of the display screen, in step 104. The effective pattern area refers to an area to be used for pattern recognition in the entire area of the captured image. Specifically, the apparatus corrects some distortion due to a difference between the captured image of the display screen and an actual image of the display screen, i.e., a rotated angel, detects a black matrix area from the corrected image, and extracts the effective pattern area in a predetermined basic pattern block size to detect an arbitrary position using the black matrix area.

After extracting the effective pattern area, the apparatus detects a subpixel within the effective pattern area, normalizes the quality of the subpixel, and then determines the dent and holes to recognize a pattern, in step 106.

Upon recognition of the pattern, the apparatus calculates a display coordinate of the pixel based on the result of the pattern recognition, in step 108. That is, the apparatus detects the pixel position by analyzing points where the dent hole, the position holes, and the parity holes are formed and by calculating the display coordinate of the pixel.

As described above, a pixel position is detected by recognizing a pattern formed in a display according to properties of a display panel, which facilitates easy pattern recognition compared to the conventional pattern recognition method using a separately attached digital paper. This has an advantage of reducing the required calculations and memory consumption by using a low complex algorithm for pattern recognition, thereby improving input processing even when a quick writing is done with an input device, such as the electronic pen. Further, more precise pattern recognition is performed by easily detecting holes in an image of the display screen, and detecting an input position based on the correct pattern recognition result.

Various modifications can be made possible without departing the present invention. For example, although in the foregoing description of the present invention, a 2 x 2 pixel base pattern structure was taken as an example, various pixel based pattern structures may also be used for position detection.

While the present invention has been particularly shown and described with reference to certain embodiments thereof, it will be understood by those of ordinary skill in the art that various changes in form and details may be made therein without departing from the spirit and scope of the present invention as defined by the following claims and their equivalents.

**Claims**

1. An apparatus for detecting an input position using display pattern recognition, the apparatus compri sing:

   an effective pattern area extractor for receiving an image of a display screen captured by a camera and extracting an effective pattern area for pattern recognition from the captured image of the display screen;
   a pattern recognizer for detecting subpixels included in the effective pattern area and identifying a plurality of holes included in each of the subpixels; and
   a display coordinate calculator for detecting an input position based on points at which the plurality of holes included in the each of the subpixels are formed.

2. The apparatus of claim 1, wherein the effective pattern area extractor comprises:

   a rotation angle corrector for correcting the captured image by correcting a rotated angle between the captured image of the display screen and an actual image of the display screen;
   a black matrix detector for detecting a black matrix area from the corrected image of the display screen; and
   a warping unit for extracting the effective pattern area in a predetermined basic pattern block size to detect an arbitrary position using the black matrix area.

3. The apparatus of claim 1, wherein the pattern recognizer comprises:

a subpixel detector for detecting the subpixels included in the effective pattern area;
a normalizer for performing normalization on a quality of the detected subpixels; and
a dent and hole determiner for identifying the plurality of holes in the normalized subpixels.

**4.** The apparatus of any of claims 1 to 3, wherein the display coordinate calculator calculates a display coordinate based on the points at which the plurality of holes are formed in the subpixels.

**5.** The apparatus of claim 4, wherein the plurality of holes comprises:

a dent hole that represents a basis for calculating the input position; and
a plurality of position holes for calculating horizontal and vertical coordinate values of the input position.

**6.** The apparatus of claim 5, wherein the plurality of holes further comprises a plurality of parity holes for checking whether there is an error in the plurality of position holes.

**7.** A method of detecting an input position using display pattern recognition, the method comprising:

receiving an image of a display screen captured by a camera;
extracting an effective pattern area for pattern recognition from the captured image of the display screen;
detecting subpixels included in the effective pattern area;
identifying a plurality of holes included in each of the subpixels; and
detecting an input position based on points at which the plurality of holes included in each of the subpixels are formed.

**8.** The method of claim 7, wherein extracting the effective pattern area comprises:

correcting the captured image by correcting a rotated angle between the captured image of the display screen and an actual image of the display screen;
detecting a black matrix area from the corrected image; and
extracting the effective pattern area in a predetermined basic pattern block size to detect an arbitrary position using the black matrix area.

**9.** The method of claim 7, wherein identifying the plurality of holes comprises:

detecting the subpixels included in the effective pattern area;
performing normalization on a quality of the detected subpixels; and
determining the plurality of holes in the normalized subpixels.

**10.** The method of any of claims 7 to 9, wherein the plurality of holes comprises:

a dent hole that represents a basis for calculating the input position; and
a plurality of position holes for calculating horizontal and vertical coordinate values of the input position.

**11.** The method of claim 10, wherein the plurality of holes comprises a plurality of parity holes for checking whether there is an error in the plurality of position holes.

FIG.1

FIG.2

FIG.3

FIG.4

FIG.5

FIG.6

FIG.7

FIG.8

$(x_0, y_0)$

$(x_1, y_1)$

$(x_3, y_3)$

$(x_2, y_2)$

FIG.9A

FIG.9B

FIG.10A

FIG.10B

FIG.11

FIG.12A

FIG.12B

FIG.13

START

ENTER CAPTURED IMAGE OF DISPLAY SCREEN — 102

EXTRACT EFFECTIVE PATTERN AREA
FROM THE IMAGE OF DISPLAY SCREEN — 104

DETECT SUBPIXEL IN EFFECTIVE PATTERN AREA
AND RECOGNIZE PATTERN BASED ON DETERMINED
DENT HOLE AND POSITION HOLES IN THE SUBPIXEL — 106

DETECT PIXEL POSITION BY CALCULATING DISPLAY
COORDINATE BASED ON POINTS WHERE THE DETERMINED
DENT HOLE AND POSITION HOLES ARE FORMED — 108

END

# FIG.14